# EUROPEAN PATENT SPECIFICATION

(11) **EP 1 705 396 B1**
(45) Date of publication and mention of the grant of the patent: **09.04.2008**
(21) Application number: 05020473.4
(22) Date of filing: 20.09.2005
(51) Int. Cl.: F16F 9/06, B62K 25/08

(54) **Front fork of motorcycle**
Motorradvorderradgabel
Fourche avant de motocyclette

(30) Priority: 25.03.2005 JP 2005089939
(43) Date of publication of application: 27.09.2006
(73) Proprietor: SHOWA CORPORATION, Gyoda-shi, Saitama (JP)
(72) Inventor: Ohta, Masatoshi c/o Showa Corporation, Fukuroi-shi Shizuoka (JP)
(74) Representative: Grünecker, Kinkeldey, Stockmair & Schwanhäusser Anwaltssozietät

(56) References cited:
- EP-A- 1 306 574
- WO-A-03/102426
- WO-A-20/04079222
- JP-A- 56 006 937
- US-A- 4 295 658
- US-A1- 2002 121 416
- US-B1- 6 427 986

## Description

The present invention relates to a front fork of a motorcycle.

The Japanese Patent Publication (JP-B) No. 61-59410 (Patent Document 1) describes a front fork of a motor-cycle in which a vehicle body side tube and a wheel side tube are slidably inserted, an oil reservoir chamber and a gas chamber in an upper portion of the oil reservoir chamber are provided in inner portions of the vehicle body side tube and the wheel side tube, wherein an auxiliary tank is coupled with a lower portion of the wheel side tube, an auxiliary oil chamber, and an auxiliary gas chamber sectioned by a partition wall member from the auxiliary oil chamber are provided in an inner portion of the auxiliary tank, and an orifice, and a relief valve bypassing the orifice are interposed in a communication path between the oil reservoir chamber and the auxiliary gas chamber, and the orifice is closed and a set load of the relief valve is increased at a time when a brake is operated.

In other words, in the front fork disclosed in patent document 1, when the brake is operated, the orifice is closed, then a pressure in the gas chamber is increased, thereby a nose dive is prevented. When the pressure in the gas chamber becomes equal to or higher than a predetermined pressure, the relief valve is opened, the pressure in the gas chamber is blown to the auxiliary gas chamber, and a compression of the front fork is smoothened, whereby a cushion property is secured.

The front fork in the patent document 1 has the following problems.
(1) Since the orifice is provided in the communication path between the oil reservoir chamber and the auxiliary oil chamber, the orifice generates a damping force even at a normal compression time of the front fork when the brake is not operated, whereby a cushion property is deteriorated.
(2) A working fluid going to return to the oil reservoir chamber from the auxiliary oil chamber is hard to be returned due to a passage resistance of the orifice in an initial stage of an elongating motion of the front fork after a brake operation, resulting in a negative pressure within the gas chamber such that a smooth elongating motion is prevented.

An object of the present invention is to prevent a nose dive by increasing a pressure in a gas chamber at a time of operating a brake, and to intend to smoothen an elongating motion after operating the brake without deteriorating cushion property at a normal traveling time in a front fork which improves the cushion property by moderating a pressure increase in the gas chamber after preventing the nose dive.

In accordance with the present invention, there is provided a front fork of a motorcycle in which a wheel side tube is slidably inserted into a vehicle body side tube or vice versa, and an oil reservoir chamber and a gas chamber in an upper portion of the oil reservoir chamber are provided in an inner portion of the vehicle body side tube and the wheel side tube. An auxiliary tank is coupled with a lower portion of the wheel side tube, and an auxiliary oil chamber and an auxiliary gas chamber sectioned from the auxiliary oil chamber by a partition member are provided in an inner portion of the auxiliary tank. A communication path communicating the oil reservoir chamber with the auxiliary oil chamber is provided, and an opening and closing valve closing the communication path while working with a brake operation is provided. A bypass passage bypassing the communication path and communicating the oil reservoir chamber with the auxiliary oil chamber is provided, and a blow valve opening the bypass passage at a time when the gas chamber reaches a predetermined pressure in a state in which the opening and closing valve is closed is provided.

The present invention will be fully understood from the detailed description given below and from the accompanying drawings which should not be taken to be a limitation on the invention, but are for explanation and understanding only.
The drawings:
FIG. 1 is an entirely sectional view showing a front fork;
FIG. 2 is a sectional view of a lower portion in FIG. 1;
FIG. 3 is a sectional view of an intermediate portion in FIG. 1;
FIG. 4 is a sectional view of an upper portion in FIG. 1;
FIG. 5 is an enlarged view of a main portion in FIG. 1;
FIG. 6 is a sectional view showing an auxiliary tank; and
FIG. 7 is a graph showing a compression load characteristics of the front fork.

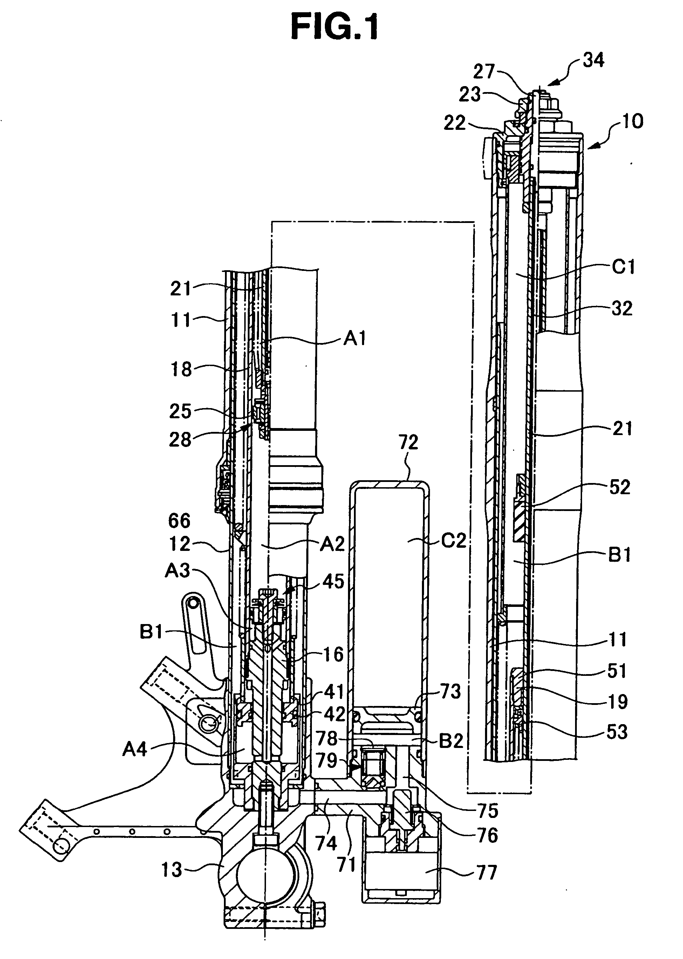

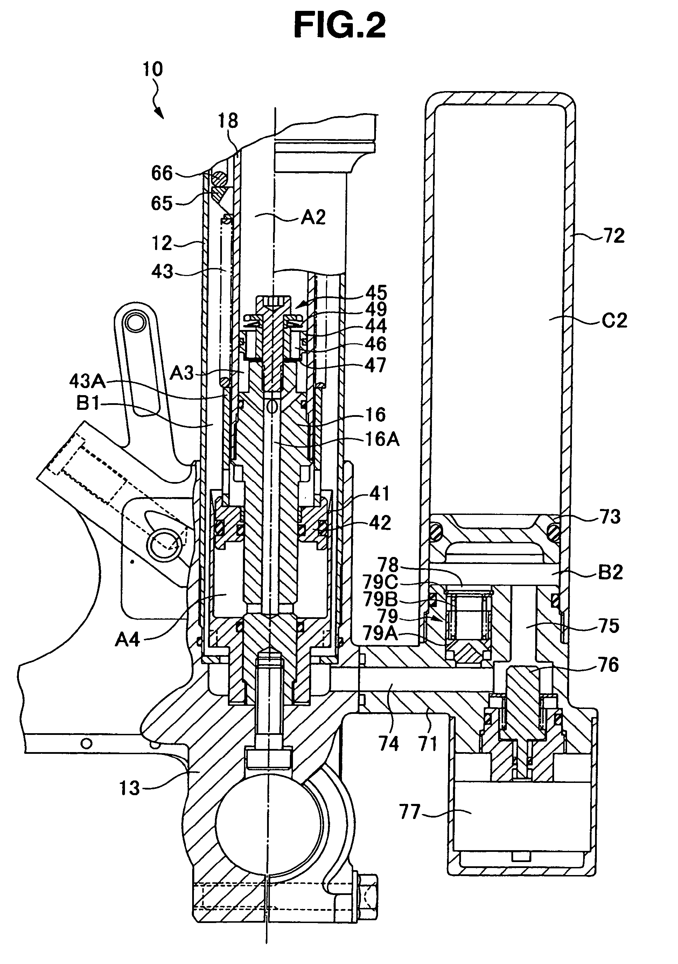

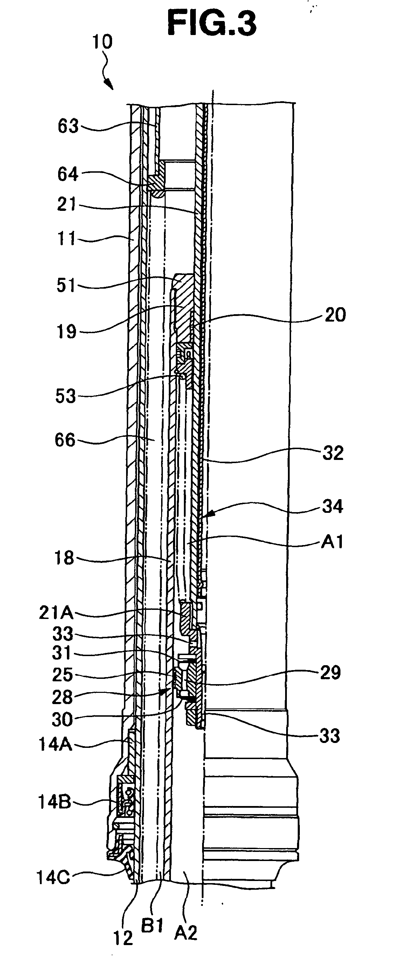

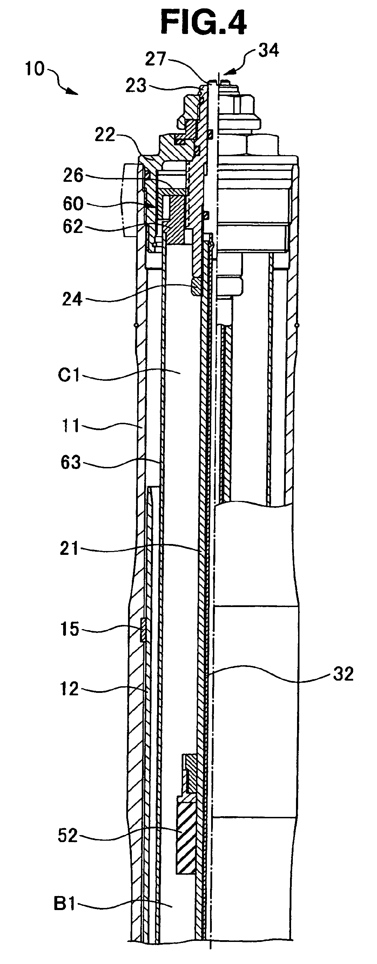

A front fork 10 of a motorcycle is structured, as shown in FIGS. 1 to 4, such that a wheel side tube 12 is slidably inserted into a vehicle body side tube 11, the vehicle body side tube 11 is coupled with the vehicle body side via an upper bracket (not shown), and the wheel side tube 12 is coupled with an axle side via an axle bracket 13. A lower bush 14A, an oil seal 14B and a dust seal 14C brought into slidable contact with an outer periphery of the wheel side tube 12 are fixed to an inner periphery of an open end in a lower portion of the vehicle body side tube 11, and an upper bush 15 brought into contact with an outer periphery of the wheel side tube 12 is fixed to an inner periphery of an upper portion of the vehicle body side tube 11.

The front fork 10 is structured such that a damper cylinder 18 is provided in a rising manner in a bottom portion of the axle bracket 13 of the wheel side tube 12 via a bottom piece 16 fastened by bolt to the axle bracket 13, a rod guide 19 is screwed to an inner periphery of an upper portion of the damper cylinder 18, and a hollow piston rod 21 can be slidably inserted via a bush 20 provided in an inner periphery of the rod guide 19. On the other hand, a cap 22 is screwed and fixed to an upper end opening portion of the vehicle body side tube 11, a hollow joint bolt 23 is attached to the cap 22 so as to be rotationally operated, and a base end portion of the piston rod 21 is screwed to a hollow lower portion of the joint bolt 23 and fixed by a lock nut 24. A piston 25 is provided in a piston bolt 21A arranged in a leading end portion of the piston rod 21, and the piston 25 slides in an inner portion of the damper cylinder 18. A spring adjuster 26 is arranged in an annular space between the joint bolt 23 and the cap 22. The spring adjuster 26 is locked to an outer periphery of the joint bolt 23 in a peripheral direction, and is engaged therewith so as to be movable in an axial direction. Furthermore, the spring adjuster 26 is screwed with an inner periphery of the cap 22, thereby structuring a spring load adjusting mechanism 60 that will be mentioned below. A damping force adjuster 27 that will be mentioned below is inserted to a hollow upper portion of the joint bolt 23, and the damping force adjuster 27 is screwed with an inner periphery of the joint bolt 23 so as to structure a damping force adjusting mechanism 34 that will be mentioned below.

The piston 25 in a leading end portion of the piston rod 21 sections an inner portion of the damper cylinder 18 into a piston rod side oil chamber A1 and a piston side oil chamber A2, and is provided with a known extension side damping force generating apparatus 28 in an oil path communicating the piston rod side oil chamber A1 with the piston side oil chamber A2.

The extension side damping force generating apparatus 28 generates an extension side damping force on the basis of a bending deformation of an extension side damping valve 30 provided in an extension side oil path 29 formed in the piston 25. In this case, a compression side check valve 31 is provided in a compression side oil path (not shown) formed in the piston 25. At this time, the damping force adjuster 27 moves a damping force adjusting rod 32 forming the damping force adjusting mechanism 34 upward and downward, and opens and closes a bypass oil path 33 in the piston 25.

An outer periphery of the damper cylinder 18 is provided with an oil reservoir chamber B1 surrounded by the vehicle body side tube 11 and the wheel side tube 12, and a gas chamber C1 formed via an oil surface.

The front fork 10 is provided with a bottom cylinder 41 formed in an outer periphery in a lower end side of the bottom piece 16 and the damper cylinder 18 and in an inner portion of the wheel side tube 12, so as to be engaged with and fixed to an outer periphery of a lower end portion of the bottom piece 16 fastened by bolt to a bottom portion of the axle bracket 13 of the wheel side tube 12. An inner portion of the bottom cylinder 41 is provided with a volume compensation chamber A4 communicated with a bottom oil chamber A3 that will be mentioned below in the inner portion of the damper cylinder 18, and the volume compensation chamber A4 is sectioned with respect to the oil reservoir chamber B1 by an annular free piston 42 sliding along an inner periphery surface of the bottom cylinder 41 and an outer peripheral surface of the bottom piece 16.

A coil spring 43 and a spring collar 43A which are backed up by a spring receiver 65 that will be mentioned below are loaded in an outer periphery in a lower end side of the damper cylinder 18, and the free piston 42 is pressed into the volume compensation chamber A4 by the spring collar 43A pressurized by the coil spring 43. An oil at a volume of the piston rod 21 moving in and out with respect to the oil chambers A1, A2 and A3 of the damper cylinder 18 is compensated on the basis of a volume change in the volume compensation chamber A4 caused by an upward and downward movement of the free piston 42. The oil making an intrusion into the oil chambers A1, A2 and A3 of the damper cylinder 18 from the oil reservoir chamber B1 via the rod guide 19 pushes up the free piston 42 little by little via the volume compensation chamber A4, and is discharged to the oil reservoir chamber B1 in a state of pushing the free piston 42 out of the upper end opening of the bottom cylinder 41.

A valve housing 44 is fastened by bolt to the upper end portion of the bottom piece 16, and the valve housing 44 forms the bottom oil chamber A3 sectioned from the piston side oil chamber A2 in the inner portion of the damper cylinder 18. Moreover, the bottom oil chamber A3 communicates with the volume compensation chamber A4 via the oil path 16A provided in the bottom piece 16, and a known compression side damping force generating apparatus 45 is provided with in the valve housing 44.

The compression side damping force generating apparatus 45 generates a compression side damping force on the basis of a bending deformation of a compression side damping valve 47 provided in a compression side oil path 46 formed in the valve housing 44. In this case, an extension side check valve 49 is provided in an extension side oil path (not shown) formed in the valve housing 45.

In this case, an upper end surface of the rod guide 19 structures a bump stopper 51, and the bump stopper 51 comes into collision with a bump rubber 52 provided in the outer periphery of the piston rod 21 at a maximum compressing time of the front fork 10 so as to perform a buffering action. Further, a rebound spring 53 is provided in an inner portion of the damper cylinder 18 and a lower portion of the rod guide 19, and the rebound spring 53 comes into collision with a rebound stopper portion of the piston bolt 21A provided in the piston rod 21 at a maximum elongating time of the front fork 10 so as to perform a buffering action.

The spring load adjusting mechanism 60 is structured such that a spring collar 63 is moved upward and downward via a slider 62 in a lower end portion of the spring adjuster 26, and a suspension spring 66 is interposed between an upper spring receiver 64 provided in a lower end portion of the spring collar 63, and a lower spring receiver 65 provided in an outer periphery of the damper cylinder 18. In other words, the suspension spring 66 is interposed between the vehicle body side tube 11 and the wheel side tube 12, in the inner portions of the oil reservoir chamber B1 and the gas chamber C1 which are surrounded by the vehicle body side tube 11 and the wheel side tube 12, and pushes the vehicle body side tube 11 and the wheel side tube 12 in an extension direction.

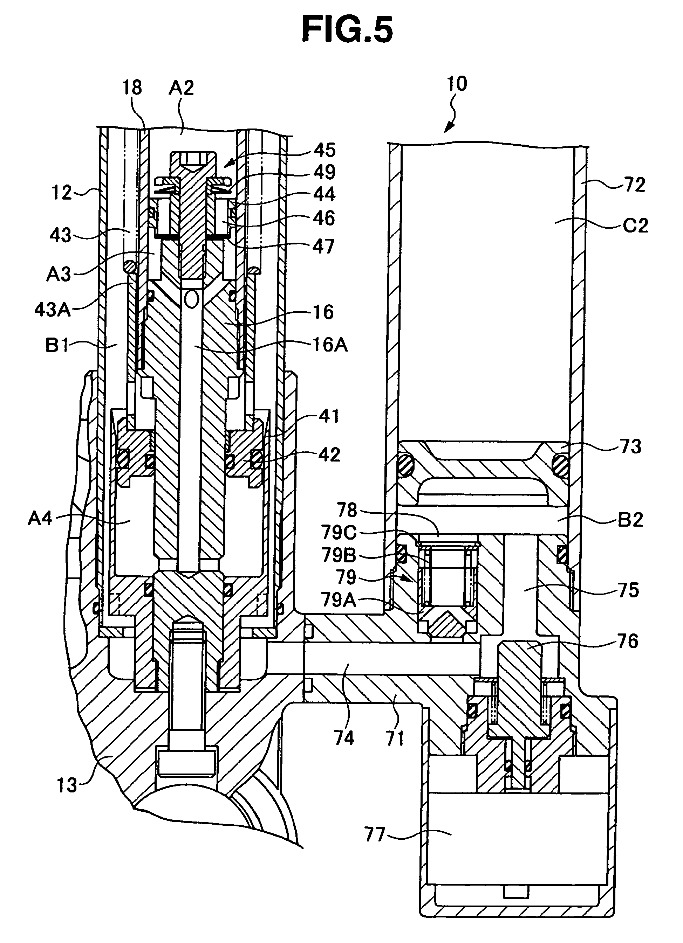

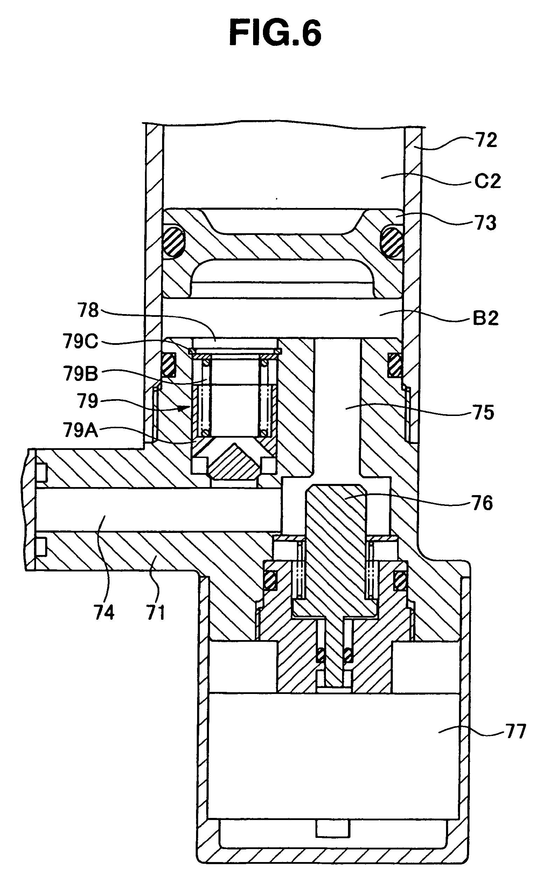

In this connection, the front fork 10 has a nose dive preventing structure as mentioned below (FIGS. 5 and 6).

A connection body 71 is firmly fixed to a side portion of the axle bracket 13 in the wheel side tube 12, and an auxiliary tank 72 is attached to the connection body 71. An inner portion of the auxiliary tank 72 is provided with an auxiliary oil chamber B2, and an auxiliary gas chamber C2 sectioned from the auxiliary oil chamber B2 by a partition wall member 73 such as a free piston or the like.

The axle bracket 13 and the connection body 71 are provided with an oil path 74 which is always communicated with the oil reservoir chamber B1 in a side of the wheel side tube 12. The connection body 71 is provided with a communication path 75 communicating the oil reservoir chamber B1 with the auxiliary oil chamber B2, communicates this with the oil path 74, and is provided with an opening and closing valve 76 closing the communication path 75 while working with a brake operation of the vehicle. The communication path 75 is not provided with any orifice, and generates no passage resistance.

The opening and closing valve 76 is opened and closed by a solenoid 77 operated on the basis of a brake signal. In this case, the opening and closing valve 76 may be mechanically opened and closed by a flexible cable working with the brake operation, or hydraulically opened and closed by a change of a hydraulic pressure according to a brake operation.

The connection body 71 is provided with a bypass passage 78 which bypasses the communication path 75, and communicates the oil reservoir chamber B1 with the auxiliary oil chamber B2 via the oil path 74. The connection body 71 is provided with a blow valve 79 opening the bypass passage 78 at a time when the gas chamber C1 in a side of the wheel side tube 12 reaches a predetermined pressure in a state in which the opening and closing valve 76 is closed. The blow valve 79 is constituted by a valve body 79A, a spring 79B and a stop ring 79C. The spring 79B is backed up by the stop ring 79C engaged with an inner periphery of the bypass passage 78 and pushes the valve body 79A to a closing direction, whereby the blow valve 79 closes the bypass passage 78 at a normal time.

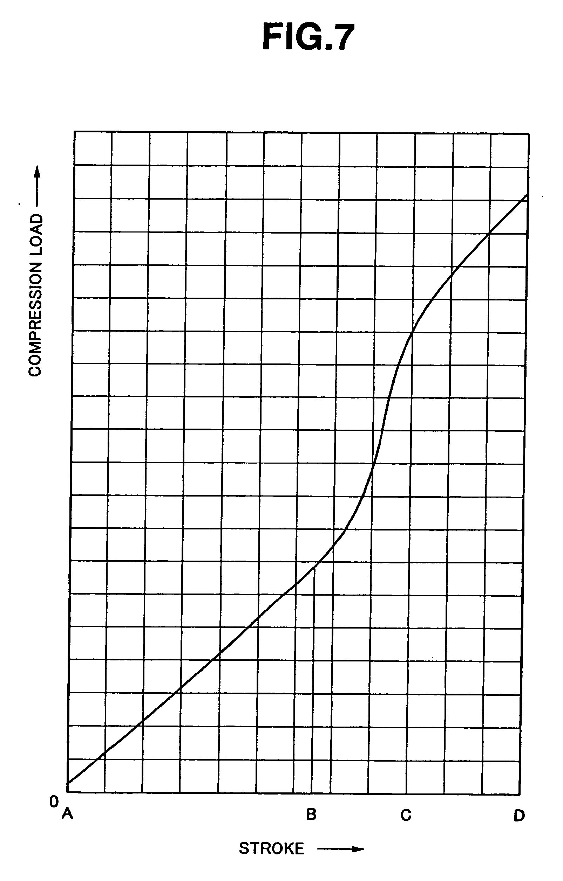

Therefore, in accordance with the present embodiment, the following operations and effects can be achieved. In this case, a relation between a compression stroke x and a compression load P of the front fork 10 is shown in FIG. 7.
(a) At the normal compression time of the front fork 10 when the brake is not operated, the gas chamber C1 is compressed, the working fluid in the oil reservoir chamber B1 smoothly flows to the auxiliary oil chamber B2 through the communication path 75, and contracts the auxiliary gas chamber C2. In this case, a compression load of an entire of the front fork 10 is obtained by a combined load of a compression reaction force of the gas chamber C1 and the auxiliary gas chamber C2, and a compression reaction force of the suspension spring 66, and the compression reaction force of the gas chamber C1 and the auxiliary gas chamber C2 becomes lower in accordance with the fact that an entire gas chamber has a large volumetric capacity, thereby securing a cushion property (section A to B in FIG. 7).
(b) At the compression time of the front fork 10 when the brake is operated, the opening and closing valve 76 closes the communication path 75 between the oil reservoir chamber B1 and the auxiliary oil chamber B2. Accordingly, only the gas chamber C1 is compressed, and the auxiliary gas chamber C2 is not compressed. Accordingly, the compression load of the front fork 10 becomes the combined load of the compression reaction force of the gas chamber C1 and the compression reaction force of the suspension spring 66, and the compression reaction force of the gas chamber C1 becomes higher at a degree that the volumetric capacity of the entire gas chamber becomes small by removing the auxiliary gas chamber C2. As the compression load of the front fork 10 is increased, it is possible to inhibit the front fork 10 from sinking so as to prevent the nose dive (section B to C in FIG. 7).
(c) When the front fork 10 is further compressed from the state (b) mentioned above, and the reaction force of the gas chamber C1 becomes equal to or higher than a predetermined value, the blow valve 79 is opened, and the oil in the oil reservoir chamber B1 enters into the auxiliary oil chamber B2, thereby inhibiting the gas chamber C1 from being increased in pressure. Accordingly, the front fork 10 is inhibited from being locked, and the front fork 10 is smoothly compressed and the cushion property is improved (section C to D in FIG. 7).
(d) When the front fork 10 changes to the elongating motion, the gas chamber C1 is expanded. At this time, the opening and closing valve 76 mentioned in the item (b) largely opens the communication path 75 between the oil reservoir chamber B1 and the auxiliary oil chamber B2. Accordingly, since the oil making an intrusion into the auxiliary oil chamber B2 at the compressing time flows back to the oil reservoir chamber B1 at the elongating time, it is possible to smoothen the elongating motion while avoiding the negative pressure in the gas chamber C1 in the initial stage of the elongating motion after the brake operation.
(e) The volume compensation chamber A4 communicating with the oil chambers A1, A2 and A3 in the inner portion of the damper cylinder 18 is provided in the inner portion of the bottom cylinder 41, which is provided in the outer periphery in the lower end side of the damper cylinder 18, and the volume compensation chamber A4 is sectioned with respect to the oil reservoir chamber B1 by the free piston 42 sliding along the inner surface of the bottom cylinder 41. Accordingly, it is possible to avoid the air from being mixed in the oil chambers A1, A2 and A3 in the inner portion of the damper cylinder 18, and it is possible to improve a response of a telescopic motion of the front fork 10.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

Although the invention has been illustrated and described with respect to several exemplary embodiments thereof, it should be understood by those skilled in the art that the foregoing and various other changes, omissions and additions may be made to the present invention without departing from the scope thereof.

The scope of the invention is limited by the appended claims.

## Claims

1. A front fork (10) of a motorcycle in which a wheel side tube (12) is slidably inserted into a vehicle body side tube (11) or vice versa, and an oil reservoir chamber (B1) and a gas chamber (C1) in an upper portion of the oil reservoir chamber (B1) are provided in an inner portion of the vehicle body side tube (11) and the wheel side tube (12),
wherein an auxiliary tank (72) is coupled with a lower portion of the wheel side tube (12), and an auxiliary oil chamber (B2) and an auxiliary gas chamber (C2) sectioned from the auxiliary oil chamber (B2) by a partition member (73) are provided in an inner portion of the auxiliary tank (72),
wherein a communication path (75) communicating the oil reservoir chamber (B1) with the auxiliary oil chamber (B2) is provided, and an opening and closing valve (76) closing the communication path (75) while working with a brake operation is provided, and
wherein a bypass passage (78) bypassing the communication path (75) and communicating the oil reservoir chamber (B1) with the auxiliary oil chamber (B2) is provided, and a blow valve (79) opening the bypass passage (78) at a time when the gas chamber (C1) reaches a predetermined pressure in a state in which the opening and closing valve (76) is closed is provided.

2. A front fork (10) of a motorcycle as claimed in claim 1, wherein a damper cylinder (18) is attached to the wheel side tube (12), and a piston rod (21) provided with a piston (25) sliding within the damper cylinder (18) is attached to the vehicle body side tube (11), and
wherein a bottom cylinder (41) provided in an outer periphery in a lower end side of the damper cylinder (18) is attached to the wheel side tube (12), a volume compensation chamber (A4) communicating with an oil chamber (A3) in an inner portion of the damper cylinder (18) is provided in an inner portion of the bottom cylinder (41), and the volume compensation chamber (A4) is sectioned with respect to the oil reservoir chamber (B1) by a free piston (42) sliding along an inner surface of the bottom cylinder (41).

3. A front fork (10) of a motorcycle as claimed in claim 1, wherein the opening and closing valve (76) is opened and closed by a solenoid (77) activated on the basis of a brake signal.

4. A front fork (10) of a motorcycle as claimed in claim 1, wherein the opening and closing valve (76) is mechanically opened and closed by a flexible cable working with a brake operation.

5. A front fork (10) of a motorcycle as claimed in claim 1, wherein the opening and closing valve (76) is hydraulically opened and closed by a change of a hydraulic pressure according to a brake operation.

6. A front fork (10) of a motorcycle as claimed in claim 1, wherein the blow valve (79) is constituted by a valve body (79A), a spring (79B) and a stop ring (79C), and wherein the spring (79B) is backed up by the stop ring (79C) engaged with an inner periphery of the bypass passage (78), and pushes the valve body (79A) to a closing direction, whereby the blow valve (79) closes the bypass passage (78) at a normal time.

7. A front fork (10) of a motorcycle as claimed in claim 2, wherein a spring receiver (65) is provided in an outer periphery of the damper cylinder (18), a coil spring (43) and a spring collar (43A) which are backed up by the spring receiver (65) are loaded in an outer periphery in a lower end portion of the damper cylinder (18), and the free piston (42) is pressed into the volume compensation chamber (A4) by a spring collar (43A) pressurized by the coil spring (43).

## Patentansprüche

1. Vorderradgabel (10) eines Motorrads, bei der eine Röhre (12) der Rad-Seite verschiebbar in eine Röhre (11) einer Fahrzeugkarosserie-Seite eingeführt ist oder umgekehrt und eine Ölvorratskammer (B1) sowie eine Gaskammer (C1) in einem oberen Abschnitt der Ölvorratskammer (B1) in einem inneren Abschnitt der Röhre (11) der Fahrzeugkarosserie-Seite und der Röhre (12) der Rad-Seite vorhanden sind;
wobei ein Zusatztank (12) mit einem unteren Abschnitt der Röhre (12) der Rad-Seite verbunden ist und eine Zusatz-Ölkammer (B2) sowie eine Zusatz-Gaskammer (C2), die durch ein Trennelement (73) von der Zusatz-Ölkammer (B2) abgeteilt ist, in einem inneren Abschnitt des Zusatztanks (72) vorhanden sind,
wobei ein Verbindungsweg (75), der die Ölvorratskammer (B1) mit der Zusatz-Ölkammer (B2) verbindet, vorhanden ist, und ein Öffnungs-und-Schließ-Ventil (76) vorhanden ist, das den Verbindungsweg (75) schließt, wenn es bei einem Bremsvorgang arbeitet, und
wobei ein Umgehungskanal (78), der den Verbindungsweg (75) umgeht und die Ölvorratskammer (B1) mit der Zusatz-Ölkammer (B2) verbindet, vorhanden ist und ein Ablassventil (79) vorhanden ist, das den Umgehungskanal (78) zu einer Zeit öffnet, zu der die Gaskammer (C1) einen vorgegebenen Druck in einem Zustand erreicht, in dem das Öffnungs-und-Schließ-Ventil (76) geschlossen ist.

2. Vorderradgabel (10) eines Motorrads nach Anspruch 1, wobei ein Dämpfzylinder (18) an der Röhre (12) der Rad-Seite angebracht ist und eine Kolbenstange (21), die mit einem Kolben (25) versehen ist, der in dem Dämpferzylinder (18) gleitet, an der Röhre (11) der Fahrzeugkarosserie-Seite angebracht ist, und
wobei ein unterer Zylinder (41), der an einem Außenumfang an einer unteren Abschlussseite des Dämpferzylinders (18) vorhanden ist, an der Röhre. (12) der Rad-Seite angebracht ist, eine Volumenausgleichskammer (A4), die mit einer Ölkammer (A3) in einem inneren Abschnitt des Dämpferzylinders (18) in Verbindung steht, in einem inneren Abschnitt des unteren Zylinders (41) vorhanden ist und die Volumenausgleichskammer (A4) in Bezug auf die Ölvorratskammer (B1) durch einen freien Kolben (42) abgeteilt ist, der an einer Innenfläche des unteren Zylinders (41) entlang gleitet.

3. Vorderradgabel (10) eines Motorrads nach Anspruch 1, wobei das Öffnungs-und-Schließ-Ventil (76) durch einen Elektromagneten (77) geöffnet und geschlossen wird, der auf Basis eines Bremssignals aktiviert wird.

4. Vorderradgabel (10) eines Motorrads nach Anspruch 1, wobei das Öffnungs-und-Schließ-Ventil (76) durch ein flexibles Kabel geöffnet und geschlossen wird, das bei einem Bremsvorgang arbeitet.

5. Vorderradgabel (10) eines Motorrads nach Anspruch 1, wobei das Offnungs-und-Schließ-Ventil (76) durch eine Änderung eines Hydraulikdrucks bei einem Bremsvorgang hydraulisch geöffnet und geschlossen wird.

6. Vorderradgabel (10) eines Motorrads nach Anspruch 1, wobei das Ablassventil (79) durch einen Ventilkörper (79A), eine Feder (79B) und einen Anschlagring (79C) gebildet wird, und die Feder (79B) durch den Anschlagring (79C) gestützt wird, der mit einem Innenumfang des Umgehungskanals (78) in Eingriff ist, und den Ventilkörper (79A) in eine Schließrichtung schiebt, so dass das Ablassventil (79) im Normalfall den Umgehungskanal (78) schließt.

7. Vorderradgabel (10) eines Motorrads nach Anspruch 2, wobei eine Federaufnahme (65) an einem Außenumfang des Dämpferzylinders (18) vorhanden ist, eine Schraubenfeder (43) und eine Feder-Manschette (43A), die durch die Feder-Aufnahme (65) gestützt werden, an einem Außenumfang an einem unteren Endabschnitt des Dämpferzylinders (18) gespannt sind und der freie Kolben (42) durch eine Feder-Manschette (43A), die von der Schraubenfeder (43) unter Druck gesetzt wird, in die Volumenausgleichskammer (A4) gedrückt wird.

## Revendications

1. Fourche avant (10) d'une motocyclette dans laquelle un tube (12) du côté de la roue est inséré de manière coulissante dans un tube (11) du côté de la carrosserie de véhicule, ou vice versa, et une chambre de réservoir d'huile (B1) et une chambre à gaz (C1) dans une partie supérieure de la chambre de réservoir d'huile (B1) sont prévues dans une partie interne du tube (11) du côté de la carrosserie de véhicule et du tube (12) du côté de la roue,
dans laquelle un réservoir auxiliaire (72) est couplé à une partie inférieure du tube (12) du côté de la roue, et une chambre d'huile auxiliaire (B2) et une chambre à gaz auxiliaire (C2) séparée de la chambre d'huile auxiliaire (B2) par un organe de séparation (73) sont prévues dans une partie interne du réservoir auxiliaire (72),
dans laquelle un trajet de communication (75) faisant communiquer la chambre de réservoir d'huile (B1) avec la chambre d'huile auxiliaire (B2) est prévu, et un robinet d'ouverture et de fermeture (76) fermant le trajet de communication (75) tout en agissant avec une opération de freinage est prévu, et
dans laquelle un conduit de dérivation (78) évitant le trajet de communication (75) et faisant communiquer la chambre de réservoir d'huile (B1) avec la chambre d'huile auxiliaire (B2) est prévu, et un robinet de purge (79) ouvrant le conduit de dérivation (78) au moment où la chambre à gaz (C1) atteint une pression prédéterminée dans un état dans lequel le robinet d'ouverture et de fermeture (76) est fermé, est prévu.

2. Fourche avant (10) d'une motocyclette selon la revendication 1, dans laquelle un cylindre d'amortissement (18) est fixé au tube (12) du côté de la roue, et une tige de piston (21) pourvue d'un piston (25) coulissant dans le cylindre d'amortissement (18) est fixée au tube (11) du côté de la carrosserie de véhicule, et
dans laquelle un cylindre inférieur (41) prévu sur une périphérie externe sur un bord d'extrémité inférieure du cylindre d'amortissement (18) est fixé au tube (12) du côté de la roue, une chambre de compensation de volume (A4) communiquant avec une chambre d'huile (A3) dans une partie interne du cylindre d'amortissement (18) est prévue dans une partie interne du cylindre inférieur (41), et la chambre de compensation de volume (A4) est séparée de la chambre de réservoir d'huile (B1) par un piston libre (42) coulissant le long d'une surface interne du cylindre inférieur (41).

3. Fourche avant (10) d'une motocyclette selon la revendication 1, dans laquelle le robinet d'ouverture et de fermeture (76) est ouvert et fermé par un solénoïde (77) actionné sur la base d'un signal de freinage.

4. Fourche avant (10) d'une motocyclette selon la revendication 1, dans laquelle le robinet d'ouverture et de fermeture (76) est mécaniquement ouvert et fermé par un câble flexible agissant avec une opération de freinage.

5. Fourche avant (10) d'une motocyclette selon la revendication 1, dans laquelle le robinet d'ouverture et de fermeture (76) est hydrauliquement ouvert et fermé par un changement de la pression hydraulique selon une opération de freinage.

6. Fourche avant (10) d'une motocyclette selon la revendication 1, dans laquelle le robinet de purge (79) est constitué par un corps de robinet (79A), un ressort (79B) et une bague d'arrêt (79C), et dans laquelle le ressort (79B) est soutenu par la bague d'arrêt (79C) mise en prise avec une périphérie interne du conduit de dérivation (78), et pousse le corps de robinet (79A) vers une direction de fermeture de sorte que le robinet de purge (79) ferme le conduit de dérivation (78) en temps normal.

7. Fourche avant (10) d'une motocyclette selon la revendication 2, dans laquelle un dispositif de réception de ressort (65) est prévu sur une périphérie externe du cylindre d'amortissement (18), un ressort hélicoïdal (43) et une coupelle de ressort (43A) qui sont soutenus par le dispositif de réception de ressort (65) sont chargés sur une périphérie externe à une partie d'extrémité inférieure du cylindre d'amortissement (18), et le piston libre (42) est pressé dans la chambre de compensation de volume (A4) par une coupelle de ressort (43A) mise sous pression par le ressort hélicoïdal (43).
